# EUROPÄISCHE PATENTSCHRIFT

(11) **EP 4 244 056 B1**
(45) Veröffentlichungstag und Bekanntmachung des Hinweises auf die Patenterteilung: **01.01.2025**
(21) Anmeldenummer: 21806742.9
(22) Anmeldetag: 11.11.2021
(51) Int. Cl.: B32B 7/12, B32B 15/01, B32B 7/06, B32B 37/00, B32B 38/00, H02K 15/02, B32B 37/12

(54) **VERFAHREN ZUM VERBINDEN VON BLECHTEILEN ZU BLECHPAKETEN**
METHOD FOR CONNECTING SHEET METAL PARTS TO STACKS OF METAL SHEETS
PROCÉDÉ DE RACCORDEMENT DES ÉLÉMENTS DE TÔLE À DES PAQUETS DE TÔLE

(30) Priorität: 11.11.2020 EP 20207047
(43) Veröffentlichungstag der Anmeldung: 20.09.2023
(73) Patentinhaber: voestalpine Stahl GmbH, 4020 Linz (AT)
(72) Erfinder: FLUCH, Ronald, 4020 Linz (AT)
(74) Vertreter: Jell, Friedrich
(86) Internationale Anmeldenummer: PCT/EP2021/081443
(87) Internationale Veröffentlichungsnummer: WO 2022/101369

(56) Entgegenhaltungen:
- EP-A1- 3 316 457
- WO-A1-2014/089593

## Beschreibung

### Technisches Gebiet

Die Erfindung betrifft ein Verfahren zum Verbinden von Blechteilen zu Blechpaketen, bei dem ein Elektroband oder -blech bereitgestellt wird, das eine erste Beschichtung über seine erste Flachseite und eine zweite Beschichtung über seine zweite, der ersten gegenüberliegenden Flachseite aufweist, wobei die erste Beschichtung einen, vorzugsweise thermisch aktivierbaren, Klebstoff aufweist und frei von Reaktionsbeschleuniger ist, und wobei die zweite Beschichtung einen Reaktionsbeschleuniger für den Klebstoff der ersten Beschichtung aufweist, Blechteile von dem Elektroband oder -blech vereinzelt, insbesondere abgetrennt, werden, die vereinzelten Blechteile derart aufeinandergestapelt werden, dass jeweils zwischen aufeinanderfolgenden Blechteilen die erste Beschichtung der zweiten Beschichtung zugewandt ist, die aufeinandergestapelten Blechteile durch Aktivierung des Klebstoffs der ersten Beschichtung miteinander verbacken werden und in einem weiteren Schritt in Blechpakete aufgeteilt werden.

### Stand der Technik

Zur Herstellung von Blechpaketen ist es etwa bekannt, Blechteile von einem backlackbeschichteten Elektroband oder -blech zu vereinzeln, zu stapeln, zu verbacken und anschließend die verbackten Blechteile in Blechpakete aufzuteilen.

Hierzu werden diverse Arten von Elektrobändern verwendet - beispielsweise auch ein beidseitig beschichtetes Elektroband, das eine erste Beschichtung über seine erste Flachseite aufweist und das eine zweite Beschichtung über seine zweite, der ersten gegenüberliegenden Flachseite, aufweist. Die erste Beschichtung weist einen, vorzugsweise thermisch aktivierbaren, Klebstoff auf und ist frei von Reaktionsbeschleuniger. Die zweite Beschichtung enthält den Reaktionsbeschleuniger für den Klebstoff der ersten Beschichtung (WO2019/201788A1). Beim Stapeln der abgetrennten Blechteile ist die erste Beschichtung der zweiten Beschichtung zugewandt, wobei der Reaktionsbeschleuniger der zweiten Beschichtung das Aushärten des Klebstoffs der ersten Beschichtung beschleunigt.

Ein standfester Verbund zwischen den Blechteilen ist damit geschaffen, welcher allerdings das Aufteilen bzw. Trennen in Blechpaketen erschweren kann.

Zur Erleichterung der Aufteilung der verbackten Blechteile in Blechpakete ist es aus der WO2014089593A1 bekannt, ein Trennmittel zu verwenden, das entsprechend der gewünschten Blechpakethöhe auf einen bestimmten Abschnitt des Elektrobands oder auch auf das vereinzelte Blechteil aufgebracht wird. Nachteilig können diese Trennmittel die Aushärtung des daran anliegenden Klebstoffs verzögern. Unter anderem ist daher ein Ausfließen des Klebstoffs beim Verbacken der Blechteile zu befürchten - insbesondere, wenn diese unter Druck verbacken werden. Folglich ist etwa die Formgenauigkeit der Blechpakete und damit die Reproduzierbarkeit des Verfahrens beeinträchtigt.

### Darstellung der Erfindung

Die Erfindung hat sich daher die Aufgabe gestellt, ein Verfahren zum Verbinden von Blechteilen zu Blechpaketen der eingangs geschilderten Art in der Reproduzierbarkeit zu verbessern.

Die Erfindung löst die gestellte Aufgabe durch die Merkmale des Anspruchs 1.

Wird auf der ersten und/oder zweiten Beschichtung eine Trennschicht vorgesehen, die einen Reaktionsbeschleuniger für den Klebstoff der ersten Beschichtung und ein Trennmittel aufweist, kann mithilfe des Trennmittels sichergestellt werden, dass sich die Aufteilung der Blechteile in Blechpakete erleichtert.

Dies in dem beispielsweise das Trennmittel die Haftung zwischen der ersten und zweiten Beschichtung vermindert. Zudem führt der Reaktionsbeschleuniger der Trennschicht zu einer Erhöhung der Schmelzviskosität des Klebstoffs der ersten Beschichtung, was zusätzlich die Benetzung des Klebstoffs an der Oberfläche der zweiten Beschichtung erschwert.

Zudem kann der Reaktionsbeschleuniger der Trennschicht verhindern, dass es während des Verbackens aufgrund des Trennmittels zwischen erster und zweiter Beschichtung zu einer unzureichenden Aushärtungsreaktion des Klebstoffs der ersten Beschichtung kommt. Demnach muss mit keinem Austreten bzw. Ausquetschen der ersten Beschichtung beim Verbacken der Blechteile gerechnet werden, welches sich unter anderem negativ auf die Formgenauigkeit der Blechpakete auswirken würde. Erfindungsgemäß können daher mit hoher Reproduzierbarkeit formgenaue Blechpakete hergestellt werden.

Verfahrenstechnisch einfach kann vorgesehen sein, dass die Trennschicht auf der ersten und/oder zweiten Beschichtung des Elektrobands bereichsweise vorgesehen wird.

Es ist auch möglich, diesen Verfahrensschritt einfach vorzusehen, indem die Trennschicht auf der ersten und/oder zweiten Beschichtung einzelner Blechteile bereichsweise oder vollflächig vor dem Aufeinanderstapeln vorgesehen wird.

Vorstellbar ist zudem, dass die Trennschicht bereichsweise auf die erste und/oder zweite Beschichtung des Elektrobands oder -blechs und zudem auf die erste und/oder zweite Beschichtung einzelner Blechteile bereichsweise oder vollflächig vor dem Aufeinanderstapeln vorgesehen wird.

Vorzugsweise ist das Trennmittel haftungsstörend, was die Haftung zwischen der ersten und der zweiten Beschichtung erheblich reduziert oder verhindert. Beispielsweise in dem das Trennmittel die Berührung der Oberflächen von erster und zweiter Beschichtung verhindert. Hierzu kann sich beispielsweise Natriumseife vorzugsweise Natriumoleat bzw. Natriumsalz der Ölsäure aufgrund ihrer einfachen Handhabung eignen - die Verwendung anderer haftungsstörender Trennmittel, wie Silikone, fluorhaltige (PTFE) Stoffe, Öle und/oder Fette, ist denkbar.

Der Reaktionsbeschleuniger kann beispielsweise einen Harnstoff und/oder ein Harnstoffderivat, eine Lewis Base (beispielsweise tertiäre Amine), eine Lewis Säure (beispielsweise BF₃), ein Imidazol (beispielsweise 1-Methylimidazol, 2-Methylimidazol, 2-Ethyl-4-Methylimidazol), andere Imidazolderivate, Imidazoladdukte, modifizierte Amine, heterozyklische Amine umfassen oder sein. Sämtliche der genannten Substanzen können einzeln oder als Mischung im Reaktionsbeschleuniger enthalten sein.

Vorzugsweise werden als Reaktionsbeschleuniger Imidazole als besonders effektive Katalysatoren für die Polymerisation von Harzen, beispielsweise von Epoxidharzen, verwendet.

Die Trennschicht kann verfahrenstechnisch vereinfacht und reproduzierbarer ausgebildet werden, wenn der ersten und/oder zweiten Beschichtung eine Flüssigkeit aufgebracht und getrocknet wird. Hierzu weist die Flüssigkeit neben einem Trennmittel auch einen Reaktionsbeschleuniger für den Klebstoff der ersten Beschichtung auf. Die bei diesen Bedingungen zurückbleibenden Komponenten der Flüssigkeit bilden die Trennschicht aus. Dadurch weist die Trennschicht zumindest neben dem Trennmittel auch den Reaktionsbeschleuniger für den Klebstoff der ersten Beschichtung auf.

Vorzugsweise weist die Flüssigkeit von 1 bis 30 Gew.-% Trennmittel, von 1 bis 10 Gew.-% Reaktionsbeschleuniger und optional von 0,1 bis 10 Gew.-% Colösemittel und/oder von 0,1 bis 10 Gew.-% Filmbildner sowie als Rest Wasser sowie herstellungsbedingt unvermeidliche Verunreinigungen auf. Als Colösemittel ist beispielsweise Butylglykol, Methoxypropanol, 1-Methoxypropanol, Ethoxypropanol, Butoxypropanol, sec. Butanol etc. vorstellbar. Als Filmbildner ist beispielsweise ein organisches, beispielsweise wasserbasiertes, Harz vorstellbar. Hierzu kann sich ein wasserbasiertes Acrylharz, Alkydharz, Polyurethan, Epoxid-, Phenol-, Harnstoff- und Melaminharz eignen.

Vorzugsweise wird die Flüssigkeit beim Trocknen auf 20 bis 80 °C erwärmt, wodurch unter anderem sichergestellt werden kann, dass der Klebstoff der ersten Beschichtung so nicht unerwünscht aktiviert wird. Sohin wird vor einem Verbacken der gestapelten Blechteile wird die chemische Reaktion (beispielsweise eine Vernetzung) des Klebstoffs nicht in Gang gesetzt. Auf diese Weise wird die Reproduzierbarkeit des Verfahrens nicht gefährdet.

Wird die von der Flüssigkeit ausgebildete Trennschicht auf eine Restfeuchte von maximal 5% getrocknet, kann dies die Taktgeschwindigkeiten beim Stapel der Blechteile erhöhen und das Verfahren weiter beschleunigen.

Vorzugsweise weist die zweite Beschichtung eine Trägermatrix, insbesondere aus einem organischen Harz, Polyvinylalkohol und/oder Phenoxyharz, auf.

Die erste Beschichtung ist eine Epoxidharz-basierte Beschichtung, um das Verfahren weiter zu vereinfachen und die Reproduzierbarkeit des Verfahrens zu verbessern. Vorzugsweise ist die erste Beschichtung eine Backlack-Beschichtung. Besonders bevorzugt ist eine Epoxidharz-basierte Backlack-Beschichtung als erste Beschichtung. Insbesondere kann solch eine erste Beschichtung vergleichsweise hohe Klebekräfte und eine besonders gute elektrische Isolationswirkung zwischen den Blechteilen ermöglichen.

Vorzugsweise handelt es sich bei der ersten Beschichtung um ein Bisphenol-basiertes Epoxidharz-System mit einem Härter, beispielsweise mit einer Dicyandiamidbasis. Insbesondere kann es sich um ein Bisphenol-A-Epichlorhydrinharz-System mit Dicyanamid als Härter handeln. Dieses zweistufig aushärtende Epoxidharz-System befindet sich auf dem Elektroband im B-Zustand. Damit ist die teilvernetzte erste Beschichtung noch reaktionsfähig. Durch Wärmezufuhr reagiert die im B-Zustand befindliche erste Beschichtung weiter und kann damit in den vollvernetzten C-Zustand übergeführt werden, was auch als Verbacken bezeichnet wird.

Bevorzugt ist die Dicke der zweiten Beschichtung gleich oder kleiner als 3 µm (Mikrometer), 2 µm, 1 µm oder als 0,5 µm, um besonders kompakte Blechpakete mit einer vergleichsweise hohen magnetischen Leitfähigkeit zu ermöglichen.

Vorzugsweise ist die Dicke der ersten Beschichtung gleich oder größer als 4 µm, 6 µm, 8 µm, 10 µm, 12 µm oder als 15 µm.

Insbesondere wird das Elektroband in Form eines Coils bereitgestellt, was unter anderem die Handhabung des Elektrobands im Verfahren erleichtern kann.

### Kurze Beschreibung der Zeichnungen

In den Figuren ist beispielsweise der Erfindungsgegenstand anhand einer Ausführungsvariante dargestellt. Es zeigen
- Fig. 1: eine schematische Ansicht auf eine Vorrichtung zur Blechpaketierung,
- Fig. 2: eine vergrößerte Teilansicht einer letzten Stanzstufe der Vorrichtung nach Fig. 1 und
- Fig. 3: eine vergrößerte Teilansicht auf Blechteile der Fig. 2 beim Verbacken.

### Weg zur Ausführung der Erfindung

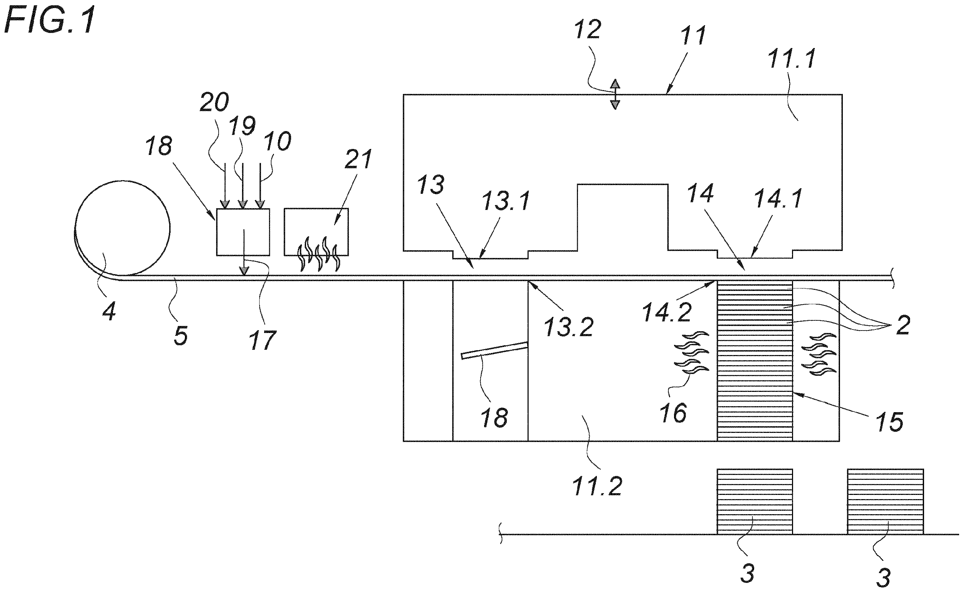

Gemäß dem Ausführungsbeispiel in Fig. 1 wird eine Vorrichtung 1 zur Durchführung des erfindungsgemäßen Verfahrens schematisch dargestellt. Diese Vorrichtung 1 dient zum Paketieren von freigestanzten Blechteilen 2 zu Blechpaketen 3.

Hierzu wird ein Elektroband 5 von einem Coil 4 bzw. Bund abgehaspelt, welches Elektroband 5 auf beiden seiner Flachseiten 6, 7 beschichtet ist - und zwar ist auf der ersten Fachseite 6 des Elektrobands 5 eine erste Beschichtung 8 und auf der zweiten Fachseite 7 des Elektrobands 5 eine zweite Beschichtung 9 vorgesehen.

Anstatt des im Ausführungsbeispiel gezeigten Elektrobands 5 ist es vorstellbar, ein Elektroblech zu verwenden.

Die erste, 3 µm dicke Beschichtung 8 besteht aus einem thermisch aktivierbaren Klebstoff, der frei von Reaktionsbeschleuniger 10 ist. Beim Klebstoff handelt es sich im Ausführungsbeispiel um ein Bisphenol-A-Epichlorhydrinharz-System mit Dicyanamid als Härter.

Die zweite, 2 µm dicke Beschichtung 9 weist den Reaktionsbeschleuniger 10 für den Klebstoff der ersten Beschichtung 8 auf. Dieser Reaktionsbeschleuniger 10, nämlich 2-Ethyl-4-Methylimidazol, ist in einer Trägermatrix aus Phenoxyharz der zweiten Beschichtung 9 eingebettet. Die Trägermatrix dient als Depot für den Reaktionsbeschleuniger 10.

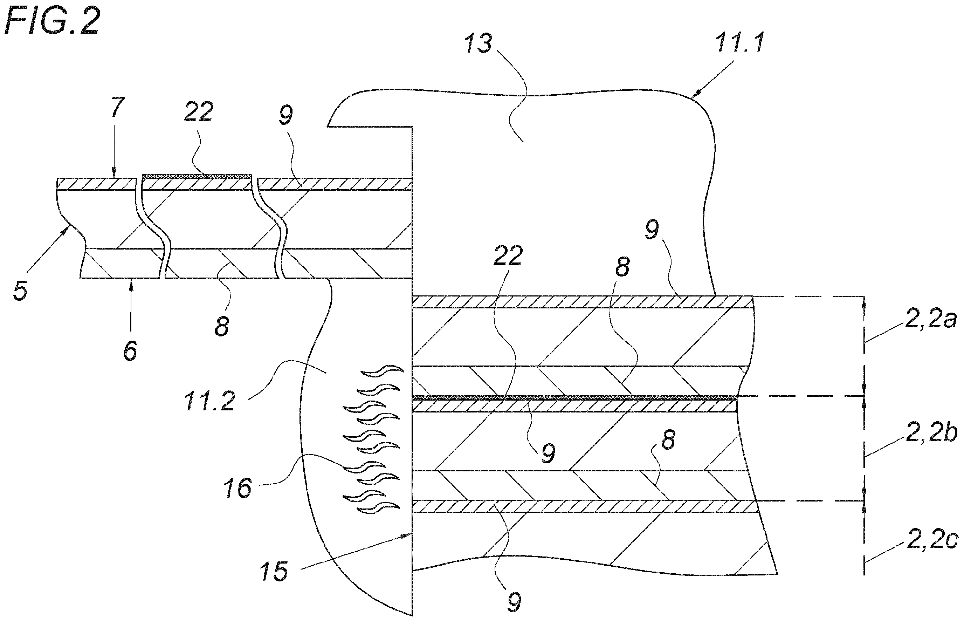

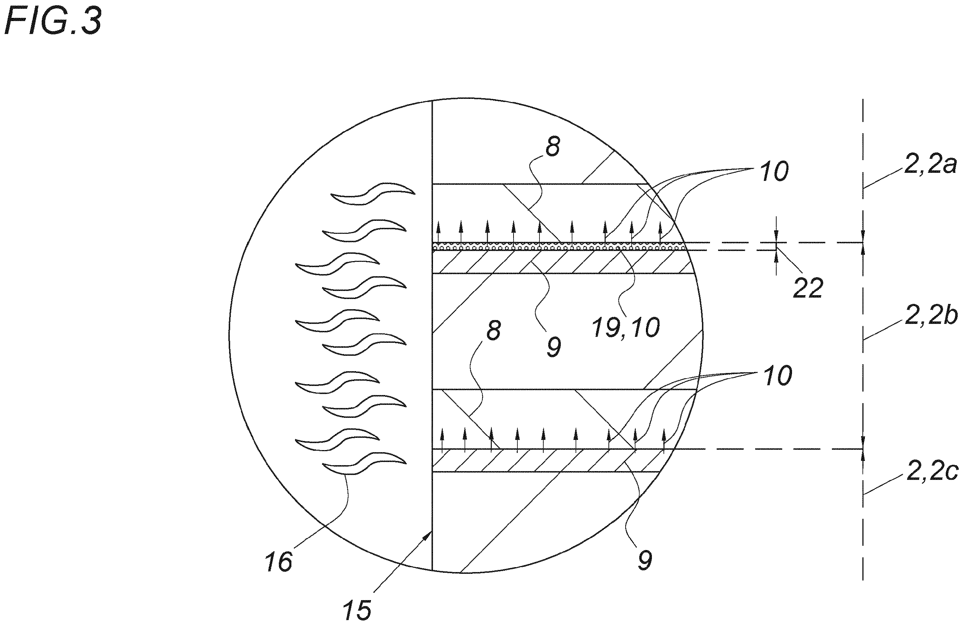

Diese beiden Beschichtungen 8, 9 sind in den Figuren 2 und 3 erkennbar - ein derart beschichtetes Elektroband 5 ist beispielsweise aus der WO2019/201788A1 bekannt.

Vom beidseitig beschichteten Elektroband 5 werden mithilfe eines Stanzwerkzeugs 11 mehrere Blechteile 2 vereinzelt. Solch ein Vereinzeln kann - im Allgemeinen erwähnt - ein Freistanzen, Ausschneiden, Abschneiden, Ausklinken, Beschneiden, Zerteilen durch Ausdrücken etc. sein.

Wie zudem der Fig. 1 entnehmbar, führt das Stanzwerkzeug 11, beispielsweise hier ein Folgestanzwerkzeug, ein Schneiden mit mehreren Hüben 12 durch, indem sein Oberwerkzeug 11.1 mit seinem Unterwerkzeug 11.2 zusammenwirkt.

Am Stanzwerkzeug sind mehrere Stanzstufen 13, 14 zu erkennen. Mit der ersten Schneide 13.1 der ersten Stanzstufe 13 wird das Elektroband 5 für ein Vereinzelt der Blechteile 2 vorbearbeitet, indem beispielsweise ein Ausschussteil 18 vom Elektroband 5 abgetrennt wird.

Nach diesem Schritt wird mit der zweiten Schneide 14.1 der zweiten Stanzstufe 14 das Blechteil 2 vom Elektroband 5 vereinzelt. Hierzu wirken die Schneiden 13.1, 14.1 mit den jeweiligen Matrizen 13.2, 14.2 der Stanzstufen 13, 14 zusammen, welche am Unterwerkzeug 11.2 vorgesehen sind.

Mithilfe der Stanzstufe 14, welche die Blechteile 2 vereinzelt bzw. hier vom Elektroband 5 abtrennt oder auch herausdrückt, wird das Blechteil 2 durch Druck des Oberwerkzeugs 11.1 in eine Stapeleinrichtung 15 gedrängt und dort gestapelt. Damit ist jeweils die erste Beschichtung 8 eines Blechteils 2 der zweiten Beschichtung 9 eines anderen Blechteils 2 zugewandt.

Die im Unterwerkzeug 11.2 vorgesehene Stapeleinrichtung 15 weist eine sich verjüngende Führung auf - was nicht dargestellt ist. Diese Führung übt die Wirkung einer Paketbremse auf die Blechteile 2 aus, wodurch die Blechteile 2 unter Druck des Oberwerkzeugs 11.1 in der Stapeleinrichtung 15 gestapelt werden.

Die Stapeleinrichtung 15 wird aktiv mit einer Heizeinrichtung 16 beheizt, um den Klebstoff zu aktivieren und zwischen den Blechteilen 2 eine stoffschlüssige Verbindung herzustellen.

In der Stapeleinrichtung 15 werden sohin die gestapelten Blechteile 2 durch thermische Aktivierung des Klebstoffs der ersten Beschichtung 8 miteinander verbacken. Während des Verklebens bzw. Verbackens der Blechteile 2 findet eine Diffusion des Reaktionsbeschleunigers 10 aus der zweiten Beschichtung 9 zum und/oder in den Klebstoff der ersten Beschichtung 8 statt. Der Reaktionsbeschleuniger 10 (bzw. Katalysator) beschleunigt die chemische Reaktion und damit das Verkleben bzw. Verbacken der Blechteile 2 - wie in Fig. 3 anhand der Blechteile 2b und 2c dargestellt.

Es ist vorstellbar, dass die Blechpakete 3 - nicht dargestellten - weiteren Aushärtungsschritten unterworfen werden, um die stoffschlüssige Verbindung zwischen den Blechteilen 2 zu stärken bzw. weiter auszuhärten.

Die miteinander verbackten Blechteile 2 werden nach der Stapeleinrichtung 15 in Blechpakete 3 aufgeteilt.

Um dies zu erleichtern sowie reproduzierbar formgenaue Blechpakete 3 zu schaffen, wird erfindungsgemäß vor dem Stapeln der Blechteile 2 auf die zweite Beschichtung 9 eine Flüssigkeit 17 mit 2 g/m^2 aufgebracht. Hierzu trägt eine Beschichtungseinrichtung 18 die Flüssigkeit 17 vor dem Stanzwerkzeug 11 auf - und zwar berührungsfrei mit einer Sprühdüse 18.1. Auf diese Weise kann eine ausreichende Menge an Flüssigkeit 17 auf der zweiten Beschichtung 9 selbst im Falle von Oberflächenunebenheiten sichergestellt werden. Alternativ ist ein berührendes Auftragen mit einem Druckstempel, beispielsweise einem Drucktampon oder Filz, vorstellbar.

Es ist aber auch vorstellbar, dass diese Flüssigkeit 17 alternativ oder zusätzlich auch auf der ersten Beschichtung 8 aufgebracht wird, was nicht dargestellt worden ist.

Die Flüssigkeit 17 weist
5 Gew.-% Natriumseife als Trennmittel 19,
2 Gew.-% 2-Ethyl-4-Methylimidazol als Reaktionsbeschleuniger 10,
2 Gew.-% 1-Methoxypropanol als Colösemittel,
und als Rest Wasser 20 sowie herstellungsbedingt unvermeidliche Verunreinigungen auf.

Anschließend wird die Flüssigkeit 17 mit einer Trocknungseinrichtung 21 unter anderem durch Verdunstung des Wassers auf 50 °C erwärmt und getrocknet, wodurch sich eine ca. 100 nm (Nanometer) dicken Trennschicht 22 auf der zweiten Beschichtung 9 ausbildet, wobei im Allgemeinen eine Schichtdicke der Trennschicht 22 von 50 bis 150 nm vorstellbar ist. Diese Trennschicht 22 weist die Komponenten der Flüssigkeit 17 auf, wie das Trennmittel 19, Reaktionsbeschleuniger 10 und gegebenenfalls den Filmbildner. Die Restfeuchte der Trennschicht 22 beträgt nach dem Trocknen 3%.

Erfindungsgemäß reduziert bzw. verhindert das Trennmittel 19 eine stoffschlüssige Verbindung zwischen zwei Blechteilen 2 bzw. - wie in Fig. 2 und 3 dargestellt zwischen den beiden Blechteilen 2, 2a und 2, 2b. Diese Wirkung wird erreicht, indem das Trennmittel 19 benetzungsstörend auf die erste und zweite Beschichtung 8, 9 wirkt. Dadurch ist das Aufteilen der Blechteile 2 in Blechpakete 3 erleichtert bzw. eine Trennstelle geschaffen, an der zwei aneinander anschließende Blechteile 2a, 2b nicht miteinander verbacken können.

Nachteilig erschwert bzw. verhindert das Trennmittel 19 allerdings einen Übertritt des Reaktionsbeschleunigers 10 der zweiten Beschichtung 9 des Blechteils 2, 2b in die erste Beschichtung 8 des Blechteils 2, 2a. Damit fehlt der ersten Beschichtung 8 ein Reaktionsbeschleuniger 10 für eine schnellere oder vollständige Aushärtung.

Erfindungsgemäß wird dieser Nachteil dadurch kompensiert, dass die Trennschicht 22 den Reaktionsbeschleuniger 10 aufweist. Damit steht der ersten Beschichtung 8 dennoch eine ausreichende Menge an Reaktionsbeschleuniger 10 zur Verfügung - was die Aushärtung des Klebstoffs der ersten Beschichtung 8 sicherstellt.

Ein die Formgenauigkeit beeinträchtigendes Ausquetschen der ersten Beschichtung 8 des Blechteils 2, 2a kann daher beim Verbacken der Blechteile 2 in der Stapeleinrichtung 15 verhindert werden. Erfindungsgemäß werden mit hoher Reproduzierbarkeit somit formgenaue Blechpakete 3 hergestellt.

Die Trennschicht 22 besteht aus dem Trennmittel 19, vorzugsweise Natriumoleat, aus dem Reaktionsbeschleuniger 10, vorzugsweise 2-Ethyl-4-Methylimidazol, und gegebenenfalls noch aus dem Filmbildner, beispielsweise ein organisches, wasserbasiertes, Harz, wobei die Trennschicht 22 aufgrund einer Restfeuchte von maximal 5 % noch Wasser aufweisen kann. Beispielsweise aufgrund des flüssigen Auftragens kann die Trennschicht 22 heterogen ausgebildet sein. Zudem können deren Bestandteile homogen verteilt sein.

Die Trennschicht 22 bzw. die Flüssigkeit 17 wird entsprechend der geforderten Höhe der Blechpakete 3 abschnittsweise auf das Elektroband oder -blech 5 und/oder auf das jeweilige Blechteil 2 aufgebracht.

## Patentansprüche

1. Verfahren zum Verbinden von Blechteilen (2) zu Blechpaketen (3), bei dem
ein Elektroband oder -blech (5) bereitgestellt wird, das eine erste Beschichtung (8) über seine erste Flachseite (6) und eine zweite Beschichtung (9) über seine zweite, der ersten gegenüberliegenden Flachseite (7) aufweist, wobei die erste Beschichtung (8) einen, vorzugsweise thermisch aktivierbaren, Klebstoff aufweist und frei von Reaktionsbeschleuniger (10) ist, und wobei die zweite Beschichtung (9) einen Reaktionsbeschleuniger (10) für den Klebstoff der ersten Beschichtung (8) aufweist,
Blechteile (2) von dem Elektroband oder -blech (5) vereinzelt, insbesondere abgetrennt, werden,
die vereinzelten Blechteile (2) derart aufeinandergestapelt werden, dass jeweils zwischen aufeinanderfolgenden Blechteilen (2) die erste Beschichtung (8) der zweiten Beschichtung (9) zugewandt ist,
die aufeinandergestapelten Blechteile (2) durch Aktivierung des Klebstoffs der ersten Beschichtung (8) miteinander verbacken werden und
in einem weiteren Schritt in Blechpakete (3) aufgeteilt werden,
**dadurch gekennzeichnet, dass**
auf der ersten und/oder zweiten Beschichtung (8, 9) eine Trennschicht (22) vorgesehen wird, die einen Reaktionsbeschleuniger (10) für den Klebstoff der ersten Beschichtung (8) und ein Trennmittel (19) aufweist, um damit die Aufteilung der Blechteile (2) in Blechpakete (3) zu erleichtern.

2. Verfahren nach Anspruch 1, **dadurch gekennzeichnet, dass** die Trennschicht (22) auf der ersten und/oder zweiten Beschichtung (8, 9) des Elektrobands (5) bereichsweise vorgesehen und/oder dass die Trennschicht (22) auf der ersten und/oder zweiten Beschichtung (8, 9) einzelner Blechteile (2) bereichsweise oder vollflächig vor dem Aufeinanderstapeln vorgesehen wird.

3. Verfahren nach einem der Ansprüche 1 bis 2, **dadurch gekennzeichnet, dass** das Trennmittel (19) haftungsstörend ist, insbesondere Natriumseife, vorzugsweise Natriumoleat, ist.

4. Verfahren nach einem der Ansprüche 1 bis 3, **dadurch gekennzeichnet, dass** der Reaktionsbeschleuniger (10) einen Harnstoff und/oder ein Harnstoffderivat, eine Lewis Base, insbesondere tertiäre Amine, eine Lewis Säure, insbesondere BF₃, ein Imidazol, insbesondere 1-Methylimidazol, 2-Methylimidazol, 2-Ethyl-4-Methylimidazol, andere Imidazolderivate, Imidazoladdukte, modifizierte Amine, heterozyklische Amine umfasst, insbesondere ist.

5. Verfahren nach einem der Ansprüche 1 bis 4, **dadurch gekennzeichnet, dass** auf der ersten und/oder zweiten Beschichtung (8, 9) eine Flüssigkeit (17) aufgebracht und getrocknet wird, welche Flüssigkeit (17) neben einem Trennmittel (19) auch einen Reaktionsbeschleuniger (10) für den Klebstoff der ersten Beschichtung (8) aufweist, um die Trennschicht (22) auszubilden.

6. Verfahren nach dem Anspruch 5, **dadurch gekennzeichnet, dass**
die Flüssigkeit (17)
von 1 bis 30 Gew.-% Trennmittel (19),
von 1 bis 10 Gew.-% Reaktionsbeschleuniger (10)
sowie optional
von 0,1 bis 10 Gew.-% Colösemittel, insbesondere 1-Methoxypropanol, und/oder
von 0,1 bis 10 Gew.-% Filmbildner, insbesondere ein organisches, insbesondere wasserbasiertes, Harz,
und als Rest Wasser (20) sowie herstellungsbedingt unvermeidliche Verunreinigungen aufweist.

7. Verfahren nach einem der Ansprüche 5 bis 6, **dadurch gekennzeichnet, dass** beim Trocknen die Flüssigkeit (17) auf 20 bis 80 °C erwärmt wird.

8. Verfahren nach einem der Ansprüche 5 bis 7, **dadurch gekennzeichnet, dass** die von der Flüssigkeit (17) ausgebildete Trennschicht (22) auf eine Restfeuchte von maximal 5 % getrocknet wird.

9. Verfahren nach einem der Ansprüche 1 bis 8, **dadurch gekennzeichnet, dass** die zweite Beschichtung (9) eine Trägermatrix, insbesondere aus einem organischen Harz, Polyvinylalkohol und/oder Phenoxyharz, aufweist.

10. Verfahren nach einem der Ansprüche 1 bis 9, **dadurch gekennzeichnet, dass** die erste Beschichtung (8) eine Epoxidharz-basierte Beschichtung und/oder eine Backlack-Beschichtung, insbesondere eine Epoxidharz-basierte Backlack-Beschichtung ist.

11. Verfahren nach einem der Ansprüche 1 bis 10, **dadurch gekennzeichnet, dass** die Dicke der zweiten Beschichtung (9) gleich oder kleiner als 3 µm, 2 µm, 1 µm oder 0,5 µm ist.

12. Verfahren nach einem der Ansprüche 1 bis 11, **dadurch gekennzeichnet, dass** die Dicke der ersten Beschichtung (8) gleich oder größer als 4 µm, 6 µm, 8 µm, 10 µm, 12 µm oder 15 µm ist.

13. Verfahren nach einem der Ansprüche 1 bis 12, **dadurch gekennzeichnet, dass** das Elektroband (5) in Form eines Coils (4) bereitgestellt wird.

## Claims

1. A method for connecting sheet metal parts (2) in order to form lamination stacks (3) in which
an electrical steel strip or sheet (5) is prepared, which has a first coating (8) on its first flat side (6) and a second coating (9) on its second flat side (7) opposite from the first, wherein the first coating (8) contains a preferably thermally activatable adhesive and is free of reaction accelerators (10), and wherein the second coating (9) contains a reaction accelerator (10) for the adhesive of the first coating (8),
sheet metal parts (2) are separated, more particularly cut, from the electrical steel strip or sheet (5),
the separated sheet metal parts (2) are stacked onto one another in such a way that between each pair of successive sheet metal parts (2), the first coating (8) faces the second coating (9),
the stacked sheet metal parts (2) are baked onto one another through activation of the adhesive of the first coating (8) and
in another step, are divided into lamination stacks (3),
**characterized in that**
the first and/or second coating (8, 9) is provided with a separating layer (22), which contains a reaction accelerator (10) for the adhesive of the first coating (8) and a release agent (19) to facilitate the division of the sheet metal parts (2) into lamination stacks (3).

2. The method according to claim 1, **characterized in that** the separating layer (22) on the first and/or second coating (8, 9) of the electrical steel strip (5) is provided in selected areas and/or the separating layer (22) on the first and/or second coating (8, 9) of individual sheet metal parts (2) is provided in selected areas or over the entire area before the stacking.

3. The method according to one of claims 1 to 2, **characterized in that** the release agent (19) is adhesion-disrupting and more particularly is a soda soap, preferably sodium oleate.

4. The method according to one of claims 1 to 3, **characterized in that** the reaction accelerator (10) contains and more particularly is a urea and/or urea derivative, a Lewis base, more particularly tertiary amines, a Lewis acid, more particularly BF₃, an imidazole, more particularly 1-methylimidazole, 2-methylimidazole, 2-ethyl-4-methylimidazole, other imidazole derivatives, imidazole adducts, modified amines, or heterocyclic amines.

5. The method according to one of claims 1 to 4, **characterized in that** a liquid (17) is applied to and dried on the first and/or second coating (8, 9), which liquid (17), in addition to a release agent (19), also contains a reaction accelerator (10) for the adhesive of the first coating (8) in order to form the separating layer (22).

6. The method according claims 5, **characterized in that** the liquid (17) contains
from 1 to 30 wt% release agent (19),
from 1 to 10 wt% reaction accelerator (10),
and optionally
from 0.1 to 10 wt% co-solvent, more particularly 1-methoxypropanol, and/or from 0.1 to 10 wt% film-forming agent, more particularly an organic, more particularly water-based, resin,
and residual water (20) as well as inevitable manufacture-related impurities.

7. The method according to one of claims 5 to 6, **characterized in that** the liquid (17) is heated to 20 to 80 °C during the drying.

8. The method according to one of claims 5 to 7, **characterized in that** the separating layer (22) formed by the liquid (17) is dried to a residual moisture of at most 5%.

9. The method according to one of claims 1 to 8, **characterized in that** the second coating (9) has a support matrix, more particularly made of an organic resin, polyvinyl alcohol, and/or phenoxy resin.

10. The method according to one of claims 1 to 9, **characterized in that** the first coating (8) is an epoxy resin-based coating and/or a backlack coating, more particularly an epoxy resin-based backlack coating.

11. The method according to one of claims 1 to 10, **characterized in that** the thickness of the second coating (9) is equal to or less than 3 µm, 2 µm, 1 µm, or 0.5 µm.

12. The method according to one of claims 1 to 11, **characterized in that** the thickness of the first coating (8) is equal to or less than 4 µm, 6 µm, 8 µm, 10 µm, 12 µm, or 15 µm.

13. The method according to one of claims 1 to 12, **characterized in that** the electrical steel strip (5) is embodied in the form of a coil (4).

## Revendications

1. Procédé pour l'assemblage de pièces de tôle (2) en paquets de tôles (3), dans lequel
un feuillard ou une tôle magnétique (5) présentant un premier revêtement (8) sur sa première face plate (6) et un deuxième revêtement (9) sur sa deuxième face plate (7) opposée à la première est fourni, le premier revêtement (8) contenant un adhésif, de préférence à activation thermique, et ne contenant pas d'accélérateur de réaction (10) et le deuxième revêtement (9) contenant un accélérateur de réaction (10) pour l'adhésif du premier revêtement (8),
des pièces de tôle (2) sont séparées du feuillard ou de la tôle magnétique (5), en particulier découpées,
les pièces de tôle (2) séparées sont empilées de telle manière que le premier revêtement (8) soit tourné vers le deuxième revêtement (9) entre des pièces de tôle (2) successives,
les pièces de tôle (2) empilées sont scellées les unes avec les autres par l'activation de l'adhésif du premier revêtement (8) et
divisées en paquets de tôles (3) dans une étape suivante,
**caractérisé en ce qu'**est prévue sur le premier revêtement et/ou le deuxième (8, 9) une couche de séparation (22) qui comporte un accélérateur de réaction (10) pour l'adhésif du premier revêtement (8) et un moyen de séparation (19), pour faciliter ainsi la division des pièces de tôle (2) en paquets de tôles (3).

2. Procédé selon la revendication 1, **caractérisé en ce que** la couche de séparation (22) sur le premier revêtement et/ou le deuxième (8, 9) du feuillard magnétique (5) est prévue par zones et/ou **en ce que** la couche de séparation (22) est prévue sur le premier revêtement et/ou le deuxième (8, 9) de certaines pièces de tôle (2), par zones ou sur toute la surface, avant l'empilage.

3. Procédé selon l'une des revendications 1 à 2, **caractérisé en ce que** le moyen de séparation (19) est un perturbateur d'adhérence, en particulier du savon de soude, de préférence de l'oléate de sodium.

4. Procédé selon l'une des revendications 1 à 3, **caractérisé en ce que** l'accélérateur de réaction (10) contient, en particulier est, une urée et/ou un dérivé d'urée, une base de Lewis, en particulier des amines tertiaires, un acide de Lewis, en particulier BF₃, un imidazole, en particulier du 1-méthylimidazole, du 2-méthylimidazole, du 2-éthyl-4-méthylimidazole, d'autres dérivés d'imidazole, des produits d'addition imidazolés, des amides modifiées, des amines hétérocycliques.

5. Procédé selon l'une des revendications 1 à 4, **caractérisé en ce qu'**un liquide (17) est appliqué et séché sur le premier revêtement et/ou le deuxième (8, 9), lequel liquide (17) contient, outre un moyen de séparation (19), un accélérateur de réaction (10) pour l'adhésif du premier revêtement (8), pour former la couche de séparation (22).

6. Procédé selon la revendication 5, **caractérisé en ce que** le liquide (17) contient
de 1 à 30 % en poids de moyen de séparation (19),
de 1 à 10 % en poids d'accélérateur de réaction (10)
et, facultativement,
de 0,1 à 10 % en poids de co-solvant, en particulier de 1-méthoxypropanol,
et/ou
de 0,1 à 10 % en poids d'agent filmogène, en particulier d'une résine organique, en particulier à base aqueuse,
et, pour le reste, de l'eau (20) et des impuretés inévitables inhérentes à la fabrication.

7. Procédé selon l'une des revendications 5 à 6, **caractérisé en ce que** le liquide (17) est chauffé entre 20 et 80 °C lors du séchage.

8. Procédé selon l'une des revendications 5 à 7, **caractérisé en ce que** la couche de séparation (22) formée par le liquide (17) est séchée jusqu'à une humidité résiduelle de 5 % au maximum.

9. Procédé selon l'une des revendications 1 à 8, **caractérisé en ce que** le deuxième revêtement (9) comporte une matrice de support, faite en particulier d'une résine organique, d'alcool polyvinylique et/ou de résine phénoxy.

10. Procédé selon l'une des revendications 1 à 9, **caractérisé en ce que** le premier revêtement (8) est un revêtement à base de résine époxy et/ou un revêtement de vernis de liaison, en particulier un revêtement de vernis de liaison à base de résine époxy.

11. Procédé selon l'une des revendications 1 à 10, **caractérisé en ce que** l'épaisseur du deuxième revêtement (9) est égale ou inférieure à 3 µm, 2 µm, 1 µm ou 0,5 µm.

12. Procédé selon l'une des revendications 1 à 11, **caractérisé en ce que** l'épaisseur du premier revêtement (8) est égale ou supérieure à 4 µm, 6 µm, 8 µm, 10 µm, 12 µm ou 15 µm.

13. Procédé selon l'une des revendications 1 à 12, **caractérisé en ce que** le feuillard magnétique (5) est fourni sous la forme d'une bobine (4).
